# EUROPEAN PATENT SPECIFICATION

(11) **EP 3 934 988 B1**
(45) Date of publication and mention of the grant of the patent: **18.05.2022**
(21) Application number: 20736240.1
(22) Date of filing: 13.07.2020
(51) Int. Cl.: B65B 29/02, B65B 43/52, B65B 43/54, B65B 57/00, B65B 65/00, B65B 65/02, B65B 43/42, B65G 54/02, B65G 47/28, B65G 47/08

(54) **MACHINE FOR MAKING CAPSULES**
MASCHINE ZUR HERSTELLUNG VON KAPSELN
MACHINE DE FABRICATION DE CAPSULES

(30) Priority: 05.08.2019 IT 201900013965
(43) Date of publication of application: 12.01.2022
(73) Proprietor: I.M.A. Industria Macchine Automatiche S.p.A., 40064 Ozzano dell'Emilia (BO) (IT)
(72) Inventor: BALDINI, Lorenzo, 40064 Ozzano dell'Emilia (Bologna) (IT); RIVOLA, Sauro, 40064 Ozzano dell'Emilia (Bologna) (IT)
(74) Representative: Milli, Simone
(86) International application number: PCT/IB2020/056567
(87) International publication number: WO 2021/024051

(56) References cited:
- EP-A1- 2 810 878
- WO-A1-2015/011657
- WO-A1-2016/200752
- US-A1- 2017 225 814

## Description

### Technical field

This invention relates to the technical sector of packaging of single-use containers containing a dose of preparation for food products (in particular for beverages), for example pods or capsules for coffee, tea or other preparations for extraction.

In particular, the invention relates to a machine and a method for making capsules containing powder product.

### Background art

The diffusion of single-use capsules and pods in particular for extraction beverages is in continuous expansion thanks to the speed, convenience and simplicity of use of these type of products, which are particularly appreciated for their efficiency and speed of use in working environments and used increasingly also in domestic environments.

The increasing demand has therefore made it necessary to continuously optimise the production processes, in particular with regard to a reduction in the processing times necessary for making the finished product.

In the prior art production plants, the capsules during production are moved through a succession of processing stations, each of which is designed to perform a specific procedure, such as, for example, the insertion of a product inside the capsule, the introduction of further elements, the application of a closing cover or the like.

It is evident from the wide variety of possible processing processes which can be performed that each of them may require specific times which do not necessarily coincide with those of the other processes; it is therefore inevitable that inside the machine designed for making the capsules there are stations which take longer than others for processing the capsules.

The above means that in the time during which the slower stations process a certain number of capsules the faster stations process a greater number of capsules, therefore causing the occurrence of bottlenecks at the infeed to the slower stations which receive too many capsules, therefore slowing down the production, or generating an adequate feeding in the faster stations which receive too few and whilst waiting remain stationary, thus wasting machine time, that is, productivity.

Document WO2015/011657 shows a packaging machine for making capsules of the type comprising a container having an inlet opening and a bottom and at least one substantially disc-shaped element associated with the container, comprises a movement system by which the containers are directed along a predetermined path in a feed direction; a movement means by which a continuous web for defining the disc-shaped elements is moved along a second predetermined path; a cutoff station where the disc-shaped elements are cut from the continuous web and which is positioned along the second predetermined path and an associating station where the disc-shaped elements are associated with the containers and which is positioned along the predetermined path; the associating station is distinct from the cutoff station and the machine comprises a transfer system by which the disc - shaped elements are transferred from the cutoff station to the associating station.

### Aim of the invention

In this context, the technical purpose which forms the basis of the invention is to propose a machine and a method for making capsules which overcomes at least some of the above-mentioned disadvantages of the prior art.

In particular, the aim of the invention is to provide a machine and a method for making capsules which are able to render more efficient the process for moving the capsules along a processing path which passes through the various stations, in such a way as to guarantee at any time the feeding to each station of the exact number of capsules which the station is able to process.

The technical purpose indicated and the aims specified are substantially achieved by a machine and a method for making capsules comprising the technical features described in one or more of the accompanying claims. This invention describes a machine for making capsules containing powder product which comprises a plurality of processing stations configured for performing respective processes for making capsules containing powder product in a respective predetermined processing time and movement means configured for conveying the capsules along a processing path which extends through the plurality of processing stations. The movement means comprise a plurality of units each designed to each receive at least one capsule body, and at least one guide rail extending along the processing path and defines with each unit a linear type motor. Advantageously, the particular type of coupling existing between each unit and the guide rail allows the individual units to be moved in an efficient manner and independent from each other.

The invention also relates to a method for making capsules containing powder product which comprises conveying in a mutually independent manner a succession of units, each of which is designed to receive at least one capsule body along a processing path which extends through a plurality of processing stations using a guide rail which defines with each unit a linear type motor.

The method also comprises:
- placing at least one capsule body on a respective unit in a first processing station;
- dosing a powder product and inserting it in the at least one capsule body in a second processing station;
- making a closing cover applying it to a respective capsule body in a third processing station;
- sealing the closing lid to the respective capsule body in a fourth processing station.

Advantageously, the steps described in the method herein allow the process for feeding the capsules to the individual processing stations to be optimised, preventing the occurrence of bottlenecks and guaranteeing that at any time each processing station is fed with the exact number of capsules which it is able to process, maintaining high quality standards without wasting machine time, that is, maximising productivity.

The dependent claims relate to different embodiments of the invention.

### Brief description of the drawings

Further features of the invention and its advantages are more apparent in the non-limiting description below, with reference to a preferred but non-exclusive embodiment of a machine for making capsules, as illustrated in the accompanying drawings, in which:
- Figure 1 shows the capsule which can be processed using the machine and/or the method according to the invention.
- Figure 2 shows a machine for making capsules according to a possible embodiment;
- Figure 3 shows a machine for making capsules according to a further possible embodiment;
- Figures 4A-4F schematically show some steps of a possible execution of a method for making capsules according to the invention.

### Detailed description of preferred embodiments of the invention

In the accompanying drawings, the numeral 1 denotes generically a machine for making capsules "C" containing powder product "R", indicated below simply as the machine 1.

The machine according to the invention comprises a plurality of processing stations 2 and movement means 3 configured for conveying the capsules "C" during processing through the various processing stations 2.

By way of example, the capsules "C" may comprise a capsule body made by moulding a metallic material, in particular aluminium or an aluminium alloy.

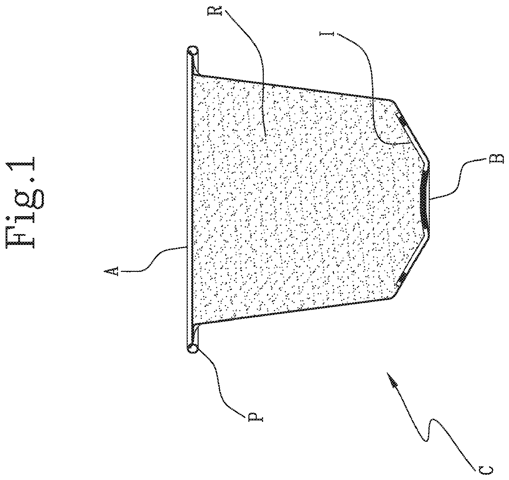

As may be seen in Figure 1 (which illustrates a capsule by way of a non-limiting example), the capsules "C" may have the shape of a substantially frustoconical hollow revolved solid, with slight taper and vertex positioned at the bottom, closed at the bottom by a circular base "B", equipped at the top with a circular opening "A", and equipped with an edge wall "P" defined by a circular crown lying horizontally.

It should be noted, more generally speaking, that the invention is applicable to any type of capsule, even of a type not illustrated.

One or more inserts "I" may also be inserted inside the capsule "C".

In general, the processing stations 2 are configured to perform respective processes aimed at making capsules "C" containing powder product "R" in a respective predetermined processing time.

In other words, each processing station 2 is characterised by a relative processing time, which may be different from that of at least one other processing station 2, identifying the duration of the process which it is designed to perform and, therefore, the time for which the capsule "C" must be retained for being correctly processed.

For example, the machine 1 may comprise a plurality of processing stations 2 comprising at least one between: a feed station configured for feeding the capsule bodies to the respective units 4; a dosing and filling station wherein the powder product "R" is dosed and introduced inside the capsule body; a station for making a closing cover, and a sealing station wherein the cover is fixed stably to the capsule body.

The plurality of processing stations 2 may also comprise at least one weighing station, wherein a qualitative check may be performed on the capsules "C" produced or during production, and/or at least one insertion station configured for applying to the capsule body a respective insert "I", such as, for example, an insert made of filtering material.

The movement means 3 are, on the other hand, configured for conveying the capsules "C" along a processing path extending through the plurality of processing stations 2.

In other words, the processing path extends at the machine 1, in such a way as to allow each capsule "C" to be transported to or also inside the various processing stations 2 to allow the latter to operate on them. Structurally, the movement means 3 comprise a plurality of units 4 each designed to receive at least one capsule body "C", and at least one guide rail 5 extending along the processing path.

In particular, each unit 4 forms with the guide rail 5 a linear type motor.

According to a first embodiment, the guide rail 5 defines the stator of a motor and it may be made, for example, with a succession of electrical elements which can be magnetised (electromagnets) whilst each unit 4 comprises one or more magnets (permanent).

The electrical elements which can be magnetised (electromagnets) of the guide rail 5 are configured to generate a magnetic field which induces in the magnets of the units 4, according to the Faraday law, an electric current which acts by repelling the inducing field.

According to an alternative embodiment, the guide rail 5 may, for example, be made with a succession of fixed conducting elements such as rings, solenoids or simple pieces of metal, whilst each unit 4 comprises one or more electromagnets configured to generate a magnetic field which induces in the conductors of the guide rail 5, according to the Faraday law, an electric current which acts by repelling the inducing field.

This interaction generates a force which makes it possible to move the respective unit 4 along the processing path.

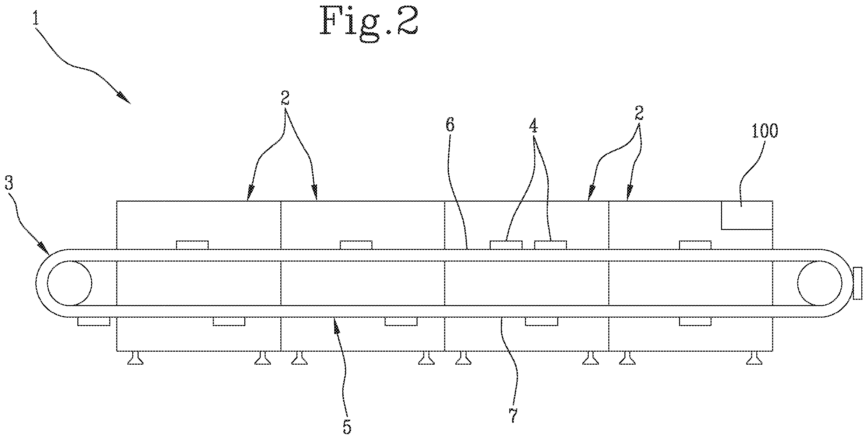

Advantageously, each unit 4 can therefore be controlled independently since it defines with the guide rail 5 an independent and autonomous linear motor which can therefore be moved without being constrained by the movement of the other units 4 forming part of the movement means 3. According to a first possible embodiment, shown schematically in Figure 2, the guide rail 5 defines a closed path which has an outward section 6 facing the plurality of processing stations 2 along the processing path and a return section 7.

Preferably, the return section 7 is positioned below the forward section 6, in such a way as to optimise the use of the spaces, reducing the overall dimensions of the guide rail.

Alternatively, it is possible to position the return section 7 alongside the forward section 6, or in any case located at the same position as the forward section 6.

In this way, once the capsule bodies have passed through all the processing stations 2 of the machine 1, and the process for making the capsules "C" has been completed, it is possible to extract them from the respective units 4 returning the latter to the start of the processing path, where they can receive further capsule bodies which will in turn be processed by the machine 1.

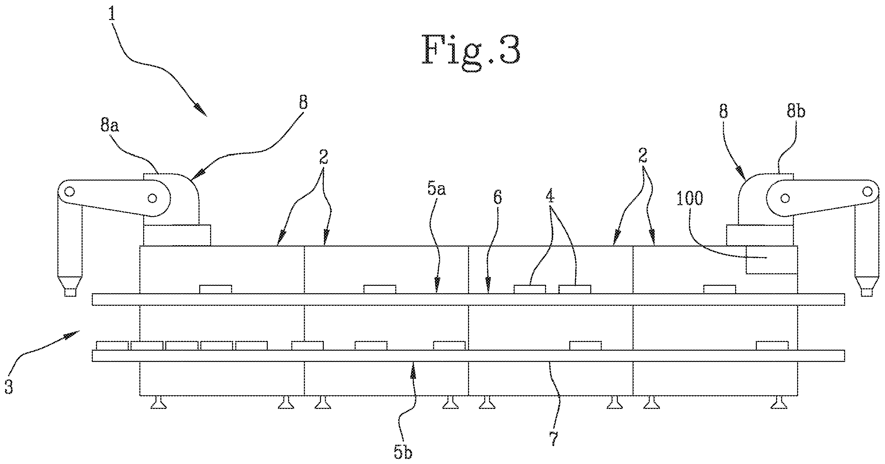

According to a second possible embodiment, shown schematically in Figure 3, the movement means 3 comprise a first guide rail 4a which defines a forward section 6 for the units 4 and a second guide rail 5b which defines a return section 7 for the units 4.

In particular, the first guide rail 5a is positioned at the plurality of stations 2 along the processing path, whilst the second guide rail 5b is positioned at the first guide rail 5a, preferably below it.

In this case, too, it is also possible to position the return section 7 alongside the forward section 6, simply positioning the second guide rail 5b alongside the first guide rail 5a or in any case placing it at the same position.

In accordance with this aspect, the movement means 3 also comprise at least one actuator device 8 configured for moving the units 4 from the first guide rail 5a to the second guide rail 5b and vice versa.

In particular, the at least one actuator device 8 is designed to move from the first guide rail 5a to the second guide rail 5b the units 4 which have passed through the entire processing path and the capsule bodies of which have undergone all the processes of the various processing stations 2 forming part of the machine 1, in such a way that the units 4 can be moved along the return section.

The at least one actuator device 8 is also configured for moving the units 4 from the second guide rail 5b to the first guide rail 5a, in such a way as to feed the units 4 to the forward section along which the units 4 will pass through all the various processing stations 2 of the machine 1.

Preferably, the at least one actuator device 8 comprises a first robotic arm 8a positioned at an initial section of the processing path, which will coincide with an initial section of the first guide rail 5a and with a final section of the second guide rail 5b, and a second robotic arm 8b positioned at a final section of the same processing path, which will consequently coincide with a final section of the first guide rail 5a and with an initial section of the second guide rail 5b.

In particular, the robotic arms 8a, 8b are equipped with manipulators which are able to engage and grip the units 4 and then move them for transferring them from one guide rail to the other.

Moreover, the machine 1 comprises a control unit 100 which is connected to each unit 4 and is active on them for controlling the movement, for example modulating the magnetic field which each of them is able to generate (that is, the magnetic field acting on them).

In accordance with one aspect of the invention, the control unit 100 is configured for actuating each unit 4 in such a way as to feed to each processing station 2 a respective predetermined number of units 4 in such a way as to be able to subject them to the same processes simultaneously.

In other words, the control unit 100 controls the movement of the units 4 in such a way that each processing station 2 can receive exactly the quantity of units which it is designed to process.

In particular, the predetermined number of units 4 to be fed to each processing station 2 is determined as a function of the processing time of the specific processing station 2 and/or as a function of a number of capsules "C" which it is able to process simultaneously.

In this way it is possible to optimise the entire processing process, since each station will receive as input the exact number of units 4 on which it can operate in a given time interval, avoiding the occurrence of bottlenecks or the waste of machine time.

For example, the control unit 100 may be configured for feeding to a processing station 2 which has a processing time greater than that of each other processing station 2 of the machine 1 a number of units 4 greater than that fed to each other processing station 2.

Thus, more generally speaking, the units 4 are moved at a variable speed along the sections between the various processing stations 2.

In this way, in a given time interval, the slower processing stations 2 will be able to process a number of capsules "C" equal to that of the faster processing stations 2.

It follows that in the faster processing stations 2 the processing of the capsules "C" will occur in a mainly sequential manner, that is to say, they will process, for example, a single unit 4 at a time, whilst in the slower stations the processing will occur in a mainly parallel manner, that is to say, they will process several units 4 at a time, increasing in number in proportion to the specific processing time of the processing station 4. Advantageously, the invention achieves the preset aims overcoming the drawbacks of the prior art by providing the user with a machine for making capsules which is able to move in an autonomous and particularly efficient manner the individual units 4 (and therefore a predetermined number of capsules "C"), thus allowing the exact number of capsules "C" which it is able to process to be selectively fed to each processing station 2.

This prevents the occurrence of bottlenecks at the inlet to the processing stations 2 or the occurrence of situations in which not enough capsules "C" are fed to a predetermined processing station 2, thereby wasting machine time.

The invention also relates to a method for making capsules containing powder product, which can be preferably performed using a machine 1 made as described above.

The method comprises conveying in a mutually independent manner a succession of units 4, each of which is designed to receive at least one capsule body.

In particular, the units are conveyed along a processing path which extends through a plurality of processing stations 2 using a guide rail 5 which defines in combination with each of the units 4 a linear type motor.

Along the processing path the units 4 are then made to pass through the various processing stations 2 in such a way that the capsule bodies can be processed for making the capsules "C".

In particular, the making of the capsules "C" starts by positioning at least one capsule body in a respective unit 4 inside a first processing station 2a. Subsequently, in a second processing station 2b, a powder product "R" is dosed and at least one capsule body is filled with the powder product "R". In other words, at the second processing station 2b the product which it must contain is introduced inside the capsule body after it has been dosed in such a way as to ensure that a correct quantity of powder product "R" is used.

At a third processing station 2c, on the other hand, a cover is made for closing the capsule body, then it is applied to it.

Lastly, in a fourth processing station 2d, the closing lid is sealed to the respective capsule body.

It should be noted that, according to an embodiment, the making of the cover for closing the capsule body and application to the capsule body and the relative sealing of the cover to the capsule body may occur in a single (same) station.

In other words, in this embodiment, the third processing station 2c and the fourth station 2d can be grouped together in the same station.

The method may also comprise further different steps aimed at making specific capsules "C" which require specific embodiments.

For example, the method may comprise a step of inserting an insert "I", preferably an insert made of filter material, inside the capsule body at a fifth processing station, not illustrated in the accompanying drawings. Moreover, in order to check that the capsules "C" have been made correctly and that the product can be effectively marketed, it is possible to weigh the capsule body in a sixth processing station 2e, in such a way as to check that a correct quantity of powder product has been inserted in it, or that other irregularities have not occurred (failure to apply the insert, the closing cover or incorrect application thereof).

It is also possible that one or more processing stations 2 coincide and therefore one or more operations are performed without the need to move the units 4 between one operation and the next.

In particular, it is possible that the sixth station 2e in which the weighing occurs is performed is made inside another processing station 2 in such a way as to check that its working process is performed correctly immediately at the end of it.

In general, the number of units 4 fed at the inlet to each processing station 2 is different to the number of units 4 fed at the inlet to at least another processing station 2.

In other words, the method comprises feeding at the inlet to each processing station 2, using the movement means 3, a specific number of units 2 which differs between the various processing stations 2 as a function of their predetermined processing time.

In particular, preferably, the number of units fed at each processing station 2 is directly proportional to the duration of the respective processing time; processing stations 2 characterised by longer processing times will therefore receive at the inlet a greater number of units 4 than processing stations 2 characterised by shorter processing times.

Moreover, the number of units 4 subjected to a process in each processing station 2 may be different to the number of units 4 subjected to a different process in at least one other processing station 2.

Similarly to what is described with regard to the feeding process, the number of units 4 subjected at a given moment to processing inside a given processing station 2 is established as a function of the respective predetermined processing time.

In other words, the slower processing stations 2 compensate for the long duration of the processing time by processing simultaneously a greater number of units 2, whilst the faster processing stations 2 will process, for example, individually a succession of units 4 in sequence.

It should be noted that there might be any number of units 4 simultaneously processed in each processing station (on the basis of the cycle times of each station).

For example, by way of a non-limiting example, the second station 2b and the third station 2c could each simultaneously process two units 4, whilst the fourth station 2d could process 3 units.

Once the production process has been completed, the method comprises unloading each capsule body from the respective unit 4, at a final section of the processing path, in such a way that the capsule "C" just produced can be fed to further processes downstream, such as, for example, processes for packaging the capsules "C".

The units 4 from which the capsule bodies have been extracted are then carried from the final section to an initial section of the processing path, which is preferably located at the first processing station 2a.

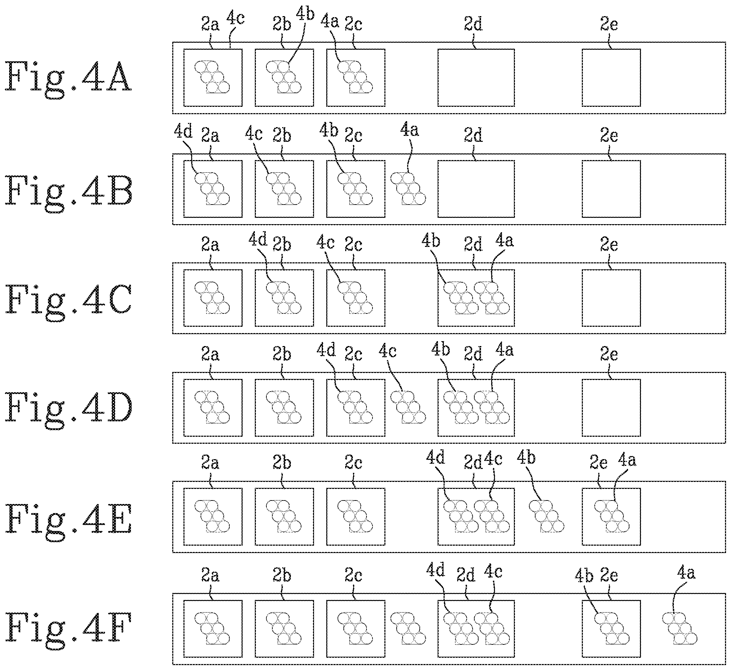

Figures 4A-4F schematically show several successive time intervals of a possible operating configuration of the method according to the invention. In particular, Figures 4A-4B each represent separate successive time intervals wherein the first, second, third and sixth processing stations 2a, 2b, 2c, 2e are able to perform the respective process in a predetermined processing time equal to the time interval shown, whilst the fourth processing station 2d, which corresponds in the example proposed for the station wherein the closing cover is sealed to the capsule body, is able to perform the respective processing process in a predetermined processing time equal to the twice the time interval shown.

In Figure 4A, the first three processing stations 2a, 2b and 2c are each processing a first unit 4a, a second unit 4b and a third unit 4c operating on each of the capsule bodies contained therein.

In Figure 4B, the first unit 4a is waiting for the inlet of the fourth processing station, whilst the second and the third units 4b, 4c are both fed to the respective subsequent processing station 2b, 2c and a fourth unit 4d is fed to the inlet of the first processing station 2a.

In Figure 4C, the first and the second units 4a, 4b are fed to the fourth processing station 2d which will take twice as long as the other processing stations 2 for processing them, simultaneously, the third and the fourth units 4c, 4d have both been fed to the next processing station 2b, 2c relative to that in which they were in the situation shown in Figure 4B.

In Figure 4D, the fourth processing station 4d is completing the process for processing the first and the second units 4a, 4b, whilst the third unit 4c is waiting at its inlet and the fourth unit 4d is processed by the third processing station 4c.

In Figure 4E, the first and the second units 4a, 4b are extracted from the fourth processing station 2d and are moved, respectively, inside the sixth processing station 4e and waiting at its inlet, whilst the third and the fourth units 4c, 4d start to be processed simultaneously inside the fourth processing station 2d.

Lastly, in Figure 4F, the first unit 4a has completed the production process, so that the respective capsule bodies can be extracted and the unit 4a will then be moved to the start of the processing path.

At the same time, the second unit 4b is processed inside the sixth processing station, whilst the third and the fourth units 4c, 4d finish being processed inside the fourth processing station 2d.

According to another aspect, upstream of said second processing station, relative to said processing path, there is a first buffer zone configured to house at least one unit 4 not being processed.

According to yet another aspect, downstream of said second processing station and upstream of at least a first processing station 2a, 2b, 2c, 2e, relative to said processing path, there is a second buffer zone for housing at least one unit 4 not being processed.

Advantageously, the invention achieves the preset aims overcoming the drawbacks of the prior art by providing the user with a method for making capsules which makes it possible to optimise the management of the resources available, in particular with respect to the use of machine time of the various processing stations 2.

## Claims

1. A machine for making a capsule (C) containing a powder product (R) comprising:
- a plurality of processing stations (2) configured to perform respective processes for making capsules (C) containing powder product (R) in a respective predetermined processing time;
- movement means (3) configured for conveying said capsules (C) along a processing path extending through the plurality of processing stations (2)
- a control unit (100) in communication with said movement means (3) for moving them along the plurality of stations (2);
said movement means (3) comprising a plurality of units (4) each designed to receive at least one capsule body, and at least one guide rail (5) extending along the processing path, each unit (4) defining with said guide rail (5) a linear type motor, **characterised in that** said plurality of processing stations comprises at least a first processing station (2a, 2b, 2c, 2e) having a first processing time (T1) and a second processing station (2d) having a second processing time (T2) greater than said first processing time (T1) and **in that** said control unit (100) is programmed for actuating said movement means (3) in such a way as to feed a first predetermined number of said unit (4) to said at least first processing station (2a, 2b, 2c, 2e) and a second predetermined number of said units (4) to said second processing station (2d), said second predetermined number of said unit (4) being greater than said first predetermined number of said units (4).

2. The machine according to claim 1, wherein said at least a first processing station (2a, 2b, 2c, 2e) comprises a station for dosing powder product (R) and filling said capsule with the powder product (R) and said second processing station (2d) comprises a station for sealing a cover to said capsule.

3. The machine according to claim 2, wherein said at least one station for dosing powder product (R) has a processing time equal to said first processing time (T1) and said sealing station has a processing time equal to said second processing time (T2).

4. The machine according to any one of the preceding claims, wherein the control unit (100) is configured for moving said movement means (3) in such a way as to feed to said second processing station (2d) a number of units (4) which is twice that fed to said at least one first processing station (2a, 2b, 2c, 2e).

5. The machine according to any one of the preceding claims, wherein upstream of said second processing station, relative to said processing path, there is a first buffer zone configured to house at least one unit (4) not being processed.

6. The machine according to any one of the preceding claims, wherein downstream of said second processing station and upstream of at least a first processing station (2a, 2b, 2c, 2e), relative to the processing path, there is a second buffer zone for housing at least one unit (4) not being processed.

7. The machine according to any one of the preceding claims, wherein the guide rail (5) defines a closed path having an outward section (6) positioned at the plurality of processing stations (2) along the processing path and a return section (7), preferably said return section (7) being positioned below the outward section (6).

8. The machine according to any one of claims 1 to 6, wherein the movement means (3) comprise:
- a first guide rail (5a) defining an outward section (6) for the units (4), said first guide rail (5a) being positioned at the plurality of stations along the processing path;
- a second guide rail (5b) defining a return section (7) for the units (4), said second guide rail (5b) being positioned at the first guide rail (5a), preferably the second guide rail (5b) being positioned below the first guide rail (5a);
- at least one actuator device (8) configured for moving the units (4) from the first guide rail (5a) to the second guide rail (5b) and vice versa.

9. The machine according to claim 8, wherein the at least one actuator device (8) comprises a first robotic arm (8a) positioned at an initial section of said processing path and a second robotic arm (8b) positioned at an end section of said processing path.

10. A method for making capsules (C) containing powder product (R), comprising the following steps:
- conveying in a mutually independent manner a succession of units (4) each designed to receive at least one capsule body along a processing path extending through a plurality of processing stations (2) by means of a guide rail (5) defining with each unit (4) a linear motor;
- in a first processing station (2a), placing at least one capsule body on a respective unit (4);
- in a second processing station (2b), dosing an powder product (R) and filling said at least one capsule body with said powder product (R);
- in a third processing station (2c), making a closing lid and applying said closing lid to a respective capsule body;
- in a fourth processing station (2d), sealing the closing cover to te respective capsule body, **characterised in that** the number of units (4) fed at the inlet to each processing station (2) is different to the number of units (4) fed at the inlet to at least another processing station (2) and is determined as a function of a predetermined processing time of said processing station (2).

11. The method according to claim 10, wherein the number of units (4) subjected to a processing in each processing station (2) is different to the number of unit (4) subjected to a different processing in at least another processing station (2) and is determined as a function of a predetermined processing time of said processing station (2).

12. The method according to claim 10 or 11, comprising the steps of:
- unloading each capsule body from the respective unit (4) at a final section of the processing path;
- returning the units (4) from the final section of the processing path to an initial section.

13. The method according to any one of claims 10 to 12, further comprising at least one step between:
- in a fifth processing station (2), inserting an insert (I), preferably an insert (I) made of filter material, inside the capsule body;
- in a sixth processing station (2e), weighing the capsule body.

## Patentansprüche

1. Maschine zur Herstellung einer Kapsel (C), die ein Pulverprodukt (R) enthalten, umfassend:
- eine Vielzahl von Verarbeitungsstationen (2), die ausgelegt sind, um jeweilige Prozesse zur Herstellung von Kapseln (C), die Pulverprodukt (R) enthalten, in einer jeweiligen vorgegebenen Prozesszeit durchzuführen;
- Bewegungsmittel (3), die ausgelegt sind, um diese Kapseln (C) entlang eines Verarbeitungswegs zu fördern, der sich durch die Vielzahl von Verarbeitungsstationen (2) erstreckt;
- eine Steuereinheit (100) in Kommunikation mit den Bewegungsmitteln (3), um diese entlang der Vielzahl von Stationen (2) zu bewegen,
wobei die Bewegungsmittel (3) eine Vielzahl von Einheiten (4) umfassen, die jeweils ausgestaltet sind, um mindestens einen Kapselkörper und mindestens eine Führungsschiene (5) aufzunehmen, die sich entlang des Verarbeitungswegs erstreckt, wobei eine jede Einheit (4) mit der Führungsschiene (5) einen Motor vom linearen Typ definiert, **dadurch gekennzeichnet, dass** die Vielzahl von Verarbeitungsstationen mindestens eine erste Verarbeitungsstation (2a, 2b, 2c, 2e) umfasst, aufweisend eine erste Verarbeitungszeit (T1), und eine zweite Verarbeitungsstation (2d), aufweisend eine zweite Verarbeitungszeit (T2), die größer ist als die erste Verarbeitungszeit (T1), und dadurch, dass die Steuereinheit (100) programmiert ist, um die Bewegungsmittel (3) zu betätigen, sodass eine erste vorgegebene Anzahl dieser Einheiten (4) der mindestens ersten Verarbeitungsstation (2a, 2b, 2c, 2e) zugeführt wird, und eine zweite vorgegebene Anzahl dieser Einheiten (4) der zweiten Verarbeitungsstation (2d) zugeführt wird, wobei die zweite vorgegebene Anzahl der Einheiten (4) größer ist als die erste vorgegebene Anzahl der Einheiten (4).

2. Maschine nach Anspruch 1, wobei mindestens die erste Verarbeitungsstation (2a, 2b, 2c, 2e) eine Station zum Dosieren von Pulverprodukt (R) und zum Füllen der Kapsel mit dem Pulverprodukt (R) aufweist und die zweite Verarbeitungsstation (2d) eine Station zum Siegeln einer Abdeckung an der Kapsel umfasst.

3. Maschine nach Anspruch 2, wobei die mindestens eine Station zum Dosieren von Pulverprodukt (R) eine Verarbeitungszeit aufweist, die gleich der ersten Verarbeitungszeit (T1) ist, und die Siegelstation eine Verarbeitungszeit aufweist, die gleich der zweiten Verarbeitungszeit (T2) ist.

4. Maschine nach einem der vorhergehenden Ansprüche, wobei die Steuereinheit (100) ausgelegt ist, um die Bewegungsmittel (3) zu bewegen, sodass der zweiten Verarbeitungsstation (2d) eine Anzahl von Einheiten (4) zugeführt wird, die das Zweifache derer beträgt, die der mindestens ersten Verarbeitungsstation (2a, 2b, 2c, 2e) zugeführt wird.

5. Maschine nach einem der vorhergehenden Ansprüche, wobei vor der zweiten Verarbeitungsstation relativ zum Verarbeitungsweg eine erste Zwischenspeicherzone bereitgestellt ist, die ausgelegt ist, um mindestens eine nicht verarbeitete Einheit (4) unterzubringen.

6. Maschine nach einem der vorhergehenden Ansprüche, wobei nach der zweiten Verarbeitungsstation und vor der mindestens ersten Verarbeitungsstation (2a, 2b, 2c, 2e) relativ zum Verarbeitungsweg eine zweite Zwischenspeicherzone bereitgestellt ist, um mindestens eine nicht verarbeitete Einheit (4) unterzubringen.

7. Maschine nach einem der vorhergehenden Ansprüche, wobei die Führungsschiene (5) einen geschlossenen Weg definiert, aufweisend eine Ausfuhrsektion (6), die an der Vielzahl von Verarbeitungsstationen (2) entlang des Verarbeitungswegs positioniert ist, und eine Rückführsektion (7), wobei die Rückführsektion (7) vorzugsweise unter der Ausfuhrsektion (6) positioniert ist.

8. Maschine nach einem der Ansprüche 1 bis 6, wobei die Bewegungsmittel (3) Folgendes umfassen:
- eine erste Führungsschiene (5a), die eine Ausfuhrsektion (6) für die Einheiten (4) definiert, wobei die erste Führungsschiene (5a) an der Vielzahl von Stationen entlang des Verarbeitungswegs positioniert ist;
- eine zweite Führungsschiene (5b), die eine Rückführsektion (7) für die Einheiten (4) definiert, wobei die zweite Führungsschiene (5b) an der ersten Führungsschiene (5a) positioniert ist, wobei die zweite Führungsschiene (5b) vorzugsweise unter der ersten Führungsschiene (5a) positioniert ist;
- mindestens eine Antriebsvorrichtung (8), die ausgelegt ist, um die Einheiten (4) von der ersten Führungsschiene (5a) zur zweiten Führungsschiene (5b) und umgekehrt zu bewegen.

9. Maschine nach Anspruch 8, wobei die mindestens eine Antriebsvorrichtung (S) einen ersten robotergesteuerten Arm (8a) umfasst, der an einer Anfangssektion des Verarbeitungswegs positioniert ist, und einen zweiten robotergesteuerten Arm (8b), der an einer Endsektion des Verarbeitungswegs positioniert ist.

10. Verfahren zur Herstellung von Kapseln (C), die Pulverprodukt (R) enthalten, umfassend die folgenden Schritte:
- Fördern einer Abfolge von Einheiten (4) auf eine voneinander unabhängige Weise, von denen eine jede ausgelegt ist, um mindestens einen Kapselkörper entlang eines Verarbeitungswegs aufzunehmen, der sich durch eine Vielzahl von Verarbeitungsstationen (2) erstreckt, mittels einer Führungsschiene (5), die mit jeder Einheit (4) einen Linearmotor definiert;
- in einer ersten Verarbeitungsstation (2a) Platzieren von mindestens einem Kapselkörper auf einer jeweiligen Einheit (4);
- in einer zweiten Verarbeitungsstation (2b) Dosieren eines Pulverprodukts (R) und Füllen des mindestens einen Kapselkörpers mit dem Pulverprodukt (R);
- in einer dritten Verarbeitungsstation (2c) Herstellen eines Verschlussdeckels und Anbringen dieses Verschlussdeckels an einem jeweiligen Kapselkörper;
- in einer vierten Verarbeitungsstation (2d) Siegeln der Verschlussabdeckung an einem jeweiligen Kapselkörper, **dadurch gekennzeichnet, dass** die Anzahl von Einheiten (4), die am Einlass einer jeden Verarbeitungsstation (2) zugeführt werden, verschieden ist von der Anzahl von Einheiten (4), die am Einlass mindestens einer anderen Verarbeitungsstation (2) zugeführt werden, und als eine Funktion einer vorgegebenen Verarbeitungszeit der Verarbeitungsstation (2) ermittelt wird.

11. Verfahren nach Anspruch 10, wobei die Anzahl von Einheiten (4), die in jeder Verarbeitungsstation (2) einer Verarbeitung unterliegen, verschieden ist von der Anzahl von Einheiten (4), die in mindestens einer anderen Verarbeitungsstation (2) einer anderen Verarbeitung unterliegen, und als eine Funktion von einer vorgegebenen Verarbeitungszeit der Verarbeitungsstation (2) ermittelt wird.

12. Verfahren nach Anspruch 10 oder 11, umfassend die folgenden Schritte:
- Entladen eines jeden Kapselkörpers aus der jeweiligen Einheit (4) an einer Schlusssektion des Verarbeitungswegs;
- Rückführen der Einheiten (4) von der Schlusssektion des Verarbeitungswegs zu einer Anfangssektion.

13. Verfahren nach einem der Ansprüche 10 bis 12, zudem umfassend mindestens einen der folgenden Schritte:
- in einer fünften Verarbeitungsstation (2) Einfügen einer Einlage (I), bei der es sich vorzugsweise um eine Einlage (I) aus Filtermaterial handelt, in den Kapselkörper;
- in einer sechsten Verarbeitungsstation (2e) Wiegen des Kapselkörpers.

## Revendications

1. Machine de fabrication d'une capsule (C) contenant un produit en poudre (R) comprenant :
- une pluralité de stations de traitement (2) configurées pour réaliser des processus respectifs pour fabriquer des capsules (C) contenant un produit en poudre (R) dans un temps de traitement prédéterminé respectif ;
- des moyens de déplacement (3) configurés pour transporter lesdites capsules (C) le long d'un parcours de traitement s'étendant à travers la pluralité de stations de traitement (2) ;
- une unité de commande (100) en communication avec lesdits moyens de déplacement (3) pour les déplacer le long de la pluralité de stations (2) ;
lesdits moyens de déplacement (3) comprenant une pluralité d'unités (4) conçues chacune pour recevoir au moins un corps de capsule, et au moins un rail de guidage (5) s'étendant le long du parcours de traitement, chaque unité (4) définissant avec ledit rail de guidage (5) un moteur de type linéaire, **caractérisé en ce que** ladite pluralité de stations de traitement comprend au moins une première station de traitement (2a, 2b, 2c, 2e) ayant un premier temps de traitement (T1) et une deuxième station de traitement (2d) ayant un deuxième temps de traitement (T2) supérieur audit premier temps de traitement (T1) et **en ce que** ladite unité de commande (100) est programmée pour actionner lesdits moyens de déplacement (3) de manière à alimenter un premier nombre prédéterminé desdites unités (4) à ladite au moins première station de traitement (2a, 2b, 2c, 2e) et un deuxième nombre prédéterminé desdites unités (4) à ladite deuxième station de traitement (2d), ledit deuxième nombre prédéterminé desdites unités (4) étant supérieur audit premier nombre prédéterminé desdites unités (4).

2. Machine selon la revendication 1, dans laquelle ladite au moins une première station de traitement (2a, 2b, 2c, 2e) comprend une station pour doser le produit en poudre (R) et remplir ladite capsule avec le produit en poudre (R) et ladite deuxième station de traitement (2d) comprend une station pour sceller une couverture sur ladite capsule.

3. Machine selon la revendication 2, dans laquelle ladite au moins une station de dosage de produit en poudre (R) a un temps de traitement égal audit premier temps de traitement (T1) et ladite station de scellement a un temps de traitement égal audit second temps de traitement (T2) .

4. Machine selon l'une quelconque des revendications précédentes, dans laquelle l'unité de commande (100) est configurée pour déplacer lesdits moyens de déplacement (3) de manière à alimenter à ladite deuxième station de traitement (2d) un nombre d'unités (4) qui est le double de celui alimenté à ladite au moins une première station de traitement (2a, 2b, 2c, 2e).

5. Machine selon l'une quelconque des revendications précédentes, dans laquelle en amont de ladite deuxième station de traitement, par rapport audit parcours de traitement, se trouve une première zone tampon configurée pour accueillir au moins une unité (4) non traitée.

6. Machine selon l'une quelconque des revendications précédentes, dans laquelle, en aval de ladite deuxième station de traitement et en amont d'au moins une première station de traitement (2a, 2b, 2c, 2e), par rapport au parcours de traitement, se trouve une deuxième zone tampon pour loger au moins une unité (4) non traitée.

7. Machine selon l'une quelconque des revendications précédentes, dans laquelle le rail de guidage (5) définit un parcours fermé ayant une section aller (6) positionnée au niveau de la pluralité de stations de traitement (2) le long du parcours de traitement et une section retour (7), de préférence ladite section retour (7) étant positionnée en dessous de la section aller (6).

8. Machine selon l'une quelconque des revendications 1 à 6, dans laquelle les moyens de déplacement (3) comprennent :
- un premier rail de guidage (5a) définissant une section aller (6) pour les unités (4), ledit premier rail de guidage (5a) étant positionné au niveau de la pluralité de stations le long du parcours de traitement ;
- un deuxième rail de guidage (5b) définissant une section de retour (7) pour les unités (4), ledit deuxième rail de guidage (5b) étant positionné au niveau du premier rail de guidage (5a), de préférence le deuxième rail de guidage (5b) étant positionné en dessous du premier rail de guidage (5a) ;
- au moins un dispositif d'actionnement (8) configuré pour déplacer les unités (4) du premier rail de guidage (5a) au second rail de guidage (5b) et vice versa.

9. Machine selon la revendication 8, dans laquelle l'au moins un dispositif actionneur (S) comprend un premier bras robotique (8a) positionné au niveau d'une section initiale dudit parcours de traitement et un second bras robotique (8b) positionné au niveau d'une section d'extrémité dudit parcours de traitement.

10. Procédé de fabrication de capsules (C) contenant un produit en poudre (R), comprenant les étapes suivantes :
- transporter de manière mutuellement indépendante une succession d'unités (4) conçues chacune pour recevoir au moins un corps de capsule le long d'un parcours de traitement s'étendant à travers une pluralité de stations de traitement (2) au moyen d'un rail de guidage (5) définissant avec chaque unité (4) un moteur linéaire ;
- dans une première station de traitement (2a), placer au moins un corps de capsule sur une unité respective (4) ;
- dans une deuxième station de traitement (2b), doser un produit en poudre (R) et remplir ledit au moins un corps de capsule avec ledit produit en poudre (R) ;
- dans une troisième station de traitement (2c), fabriquer un couvercle de fermeture et appliquer ledit couvercle de fermeture à un corps de capsule respectif ;
- dans une quatrième station de traitement (2d), sceller la couverture de fermeture sur le corps de capsule respectif, **caractérisé en ce que** le nombre d'unités (4) alimentées à l'entrée de chaque station de traitement (2) est différent du nombre d'unités (4) alimentées à l'entrée d'au moins une autre station de traitement (2) et est déterminé en fonction d'un temps de traitement prédéterminé de ladite station de traitement (2).

11. Procédé selon la revendication 10, dans lequel le nombre d'unités (4) soumises à un traitement dans chaque station de traitement (2) est différent du nombre d'unités (4) soumises à un traitement différent dans au moins une autre station de traitement (2) et est déterminé en fonction d'un temps de traitement prédéterminé de ladite station de traitement (2).

12. Procédé selon la revendication 10 ou 11, comprenant les étapes suivantes :
- décharger chaque corps de capsule de l'unité respective (4) au niveau d'une section finale du parcours de traitement ;
- retourner les unités (4) de la section finale du parcours de traitement vers une section initiale.

13. Procédé selon l'une quelconque des revendications 10 à 12, comprenant en outre au moins une étape entre :
- dans une cinquième station de traitement (2), insérer un insert (I), de préférence un insert (I) en matériau filtrant, à l'intérieur du corps de la capsule ;
- dans une sixième station de traitement (2e), peser le corps de la capsule.
